# EUROPEAN PATENT APPLICATION

(11) **EP 4 617 828 A1**
(43) Date of publication of application: **17.09.2025**
(21) Application number: 23895948.0
(22) Date of filing: 25.06.2023
(51) Int. Cl.: G06F 1/3206

(54) **POWER CONSUMPTION ESTIMATION METHOD AND PROCESSOR**

(30) Priority: 30.11.2022 CN 202211517739
(71) Applicant: Huawei Technologies Co., Ltd., Shenzhen, Guangdong 518129 (CN)
(72) Inventor: ZHOU, Yongbin, Shenzhen, Guangdong 518129 (CN); WANG, Ronghua, Shenzhen, Guangdong 518129 (CN); LIU, Zhen, Shenzhen, Guangdong 518129 (CN); GUAN, Yuxiang, Shenzhen, Guangdong 518129 (CN)
(74) Representative: Grünecker Patent- und Rechtsanwälte PartG mbB
(86) International application number: PCT/CN2023/102095
(87) International publication number: WO 2024/113784

(57) **Abstract**

Embodiments of this application provide a power consumption estimation method and a processor, and relate to the field of chip technologies, to resolve a problem of low power consumption estimation accuracy. A specific solution is as follows: The processor obtains event statistical information of a processor core, and determines a service class corresponding to the event statistical information, where the event statistical information includes a quantity and a type of at least one event that occurs during running of at least one application; and the processor determines, based on the service class, at least one power consumption model corresponding to the service class, where the at least one power consumption model is used to obtain a power consumption value of the at least one event included in the event statistical information. Embodiments of this application are used in a process in which the processor calculates the power consumption value of the event.

## Description

This application claims priority to Chinese Patent Application No. 202211517739.0, filed with the China National Intellectual Property Administration on November 30, 2022 and entitled "POWER CONSUMPTION ESTIMATION METHOD AND PROCESSOR", which is incorporated herein by reference in its entirety.

### TECHNICAL FIELD

This application relates to the field of chip technologies, and in particular, to a power consumption estimation method and a processor.

### BACKGROUND

Currently, to optimize energy efficiency of processors, a plurality of power consumption management methods are proposed in the academia and the industry. A built-in dynamic power estimator (dynamic power estimation, DPE) of the processor may provide real-time power consumption estimation for power consumption management of the processor. Power consumption estimation accuracy is critical to accuracy adjustment of power consumption management algorithms. The DPE may separately provide power consumption estimation for different modules of the processor, to provide a more accurate reference for the power consumption management algorithm. For example, power consumption estimation is separately provided for a processor core (core) and a level-3 cache (three-level cache, L3 cache), to separately determine operating voltages and frequencies of the processor core and the level-3 cache. When power consumption estimation of different modules of the processor is separately determined, a total power consumption of the processor may be known, and a decision on power consumption management may be made based on the total power consumption. However, a single power consumption model is used in most power consumption value estimation methods to perform power consumption estimation. Consequently, an accuracy loss exists when a service load changes, and power consumption estimation accuracy is low.

### SUMMARY

Embodiments of this application provide a power consumption estimation method and a processor, to determine a service class for different events, and match at least one power consumption model based on the service class, so as to calculate power consumption values corresponding to the different events, thereby resolving a problem of low power consumption estimation accuracy.

The following technical solutions are used in embodiments of this application, to achieve the foregoing objectives.

According to a first aspect, an embodiment of this application provides a power consumption estimation method. The method includes: A processor obtains event statistical information of a processor core, and determines a service class corresponding to the event statistical information, where the event statistical information includes a quantity and a type of at least one event that occurs during running of at least one application; and the processor determines, based on the service class, at least one power consumption model corresponding to the service class, where the at least one power consumption model is used to obtain a power consumption value of the at least one event included in the event statistical information.

Therefore, in the power consumption estimation method provided in this embodiment of this application, for different events, a service class can be determined based on event statistical information of the event, and at least one power consumption model corresponding to the service class can be determined. Different power consumption models are matched for different events, to calculate a power consumption value corresponding to an event under the service class. In comparison with a problem of poor power consumption estimation accuracy caused by performing power consumption estimation by using a fixed single power consumption model in the conventional technology, in this application, the service class is determined based on the event statistical information, to determine the at least one power consumption model, for power consumption estimation, corresponding to the service class, so as to improve power consumption estimation accuracy. In addition, a power consumption value determined according to a high-accuracy power consumption estimation method can help a DPE make a better power consumption management decision, to improve performance of the processor.

In a possible design, that a processor obtains event statistical information of a processor core includes: The processor cyclically samples at least one event counter, to obtain the event statistical information of the processor core in one sampling cycle, where different event counters in the at least one event counter are configured to count different types of events.

In this design, the event counter can provide the event statistical information for the processor. The processor can cyclically sample a plurality of event counters, to obtain event statistical information of all the events for which the processor core currently generates a power consumption. Cyclical sampling is also subsequently adapted to a cycle of the power consumption model determined based on the service class corresponding to the event statistical information, to subsequently calculate the power consumption value of the event.

In a possible design, the one sampling cycle is greater than or equal to a working cycle of the at least one power consumption model.

In this design, the one sampling cycle is greater than or equal to a working cycle of each power consumption model, to ensure that the service class remains unchanged in the one sampling cycle, so as to improve accuracy of the power consumption value calculated by the processor.

In a possible design, for each power consumption model in the at least one power consumption model, the power consumption model includes a weight coefficient corresponding to each event.

In a possible design, that the processor obtains, based on the at least one power consumption model, the power consumption value of the at least one event included in the event statistical information includes: When the at least one power consumption model is one power consumption model, the processor obtains, based on the event statistical information and the weight coefficient corresponding to each event, the power consumption value of the at least one event included in the event statistical information.

In this design, the processor can select one power consumption model for one event for calculation. The processor can obtain through calculation based on the event statistical information and a weight coefficient of the power consumption model, a power consumption value corresponding to each event, and accumulate the power consumption values, to obtain a total power consumption value of the processor core.

In a possible design, that the processor obtains, based on the at least one power consumption model, the power consumption value of the at least one event included in the event statistical information includes: When the at least one power consumption model is a plurality of power consumption models, the processor obtains, based on the event statistical information and the weight coefficient corresponding to each event, power consumption values that are of a plurality of events included in the event statistical information and that are calculated by the power consumption models; and the processor performs, based on percentages of the plurality of power consumption models, weighted averaging on the power consumption values corresponding to the power consumption models, to obtain power consumption values of the plurality of events included in the event statistical information.

In this design, the processor can select the plurality of power consumption models for one event for calculation. The processor can obtain through calculation based on the event statistical information and weight coefficients of the power consumption models, a power consumption value of each power consumption model corresponding to the one event, and perform, based on the percentages of between the plurality of power consumption models, weighted averaging on the power consumption values corresponding to the power consumption models, to obtain a total power consumption value of the processor core. The plurality of power consumption models are matched for the one event, accuracy of the power consumption value can be further improved.

In a possible design, the method further includes: The processor obtains, based on the at least one power consumption model, the power consumption value of the at least one event included in the event statistical information; and the processor performs power consumption adjustment on the processor core based on the power consumption value of the at least one event included in the event statistical information.

In this design, power consumption adjustment can include a dynamic voltage and frequency scaling operation and a task migration operation between big and little cores. In this embodiment of this application, different events are classified, and the at least one power consumption model is determined based on the service class. Therefore, accuracy of the power consumption value obtained through calculation is high. The processor performs power consumption adjustment on the processor core based on a high-accuracy power consumption value, and can make a more appropriate power consumption adjustment strategy, to improve energy efficiency of the processor.

In a possible design, that the processor performs power consumption adjustment on the processor core based on the power consumption value of the at least one event included in the event statistical information includes: performing power consumption adjustment on the processor core based on a power consumption value of the processor core, performance statistical information of the processor core, and thermal sensor information corresponding to the processor core.

In this design, when determining a power consumption adjustment decision, the processor not only considers the power consumption value of the processor core, but also considers the performance statistical information of the processor core and the thermal sensor information corresponding to the processor core. Therefore, a more intelligent power consumption adjustment decision can be made. Energy and heat that are consumed by the processor can be minimized while a minimum performance loss of the processor is ensured.

In a possible design, the method further includes: If the service class is a preset service class, the processor stops determining the service class corresponding to the event statistical information; and the processor obtains, based on the at least one power consumption model, the power consumption value of the at least one event included in the event statistical information.

In this design, when the service class is the preset service class, the processor can stop determining the service class corresponding to the event statistical information, and calculate the power consumption value based on previously determined event statistical information and the power consumption model. This can further reduce power consumption overheads required by the processor for service classification.

In a possible design, the method further includes: The processor updates, in a manner of firmware, the service class corresponding to the event statistical information and the at least one power consumption model corresponding to the service class.

In this design, the processor can update the service class and the power consumption model in the manner of the firmware, to facilitate subsequent calibration of the power consumption model or adaptation to a new service scenario.

According to a second aspect, an embodiment of this application provides a processor. The processor includes: a service classifier, configured to: obtain event statistical information of a processor core, and determine a service class corresponding to the event statistical information, where the event statistical information includes a quantity and a type of at least one event that occurs during running of at least one application; and a power consumption calculation module, configured to determine, based on the service class, at least one power consumption model corresponding to the service class, where the at least one power consumption model is used to obtain a power consumption value of the at least one event included in the event statistical information.

For beneficial effect of the second aspect, refer to the descriptions of the first aspect.

In a possible design, the service classifier is further configured to cyclically sample at least one event counter, to obtain the event statistical information of the processor core in one sampling cycle, where different event counters in the at least one event counter are configured to count different types of events.

In a possible design, the one sampling cycle is greater than or equal to a working cycle of the at least one power consumption model.

In a possible design, for each power consumption model in the at least one power consumption model, the power consumption model includes a weight coefficient corresponding to each event.

In a possible design, the power consumption calculation module is further configured to: when the at least one power consumption model is one power consumption model, obtain, based on the event statistical information and the weight coefficient corresponding to each event, the power consumption value of the at least one event included in the event statistical information.

In a possible design, the power consumption calculation module is further configured to: when the at least one power consumption model is a plurality of power consumption models, obtain, based on the event statistical information and the weight coefficient corresponding to each event, power consumption values that are of a plurality of events included in the event statistical information and that are calculated by the power consumption models; and perform, based on percentages of the plurality of power consumption models, weighted averaging on the power consumption values corresponding to the power consumption models, to obtain power consumption values of the plurality of events included in the event statistical information.

In a possible design, the processor further includes a power consumption management module. The power consumption calculation module is configured to obtain, based on the at least one power consumption model, the power consumption value of the at least one event included in the event statistical information. The power consumption management module is configured to perform power consumption adjustment on the processor core based on the power consumption value of the at least one event included in the event statistical information.

In a possible design, the power consumption management module is further configured to perform power consumption adjustment on the processor core based on a power consumption value of the processor core, performance statistical information of the processor core, and thermal sensor information corresponding to the processor core.

In a possible design, the service classifier is further configured to: if the service class is a preset service class, stop determining the service class corresponding to the event statistical information. The power consumption calculation module is further configured to obtain, based on the at least one power consumption model, the power consumption value of the at least one event included in the event statistical information.

In a possible design, the processor further includes an update module. The update module updates, in a manner of firmware, the service class corresponding to the event statistical information and the at least one power consumption model corresponding to the service class.

According to a third aspect, an embodiment of this application provides another power consumption estimation method. The method includes: A service classifier obtains event statistical information of a processor core, and determines a service class corresponding to the event statistical information, where the event statistical information includes a quantity and a type of at least one event that occurs during running of at least one application; and a power consumption management module 83 determines a power consumption adjustment strategy corresponding to the service class, and performs power consumption adjustment on the processor core according to the power consumption adjustment strategy.

According to a fourth aspect, a chip is provided. The chip is coupled to a memory, and is configured to read and execute program instructions that are stored in the memory, to implement the method according to the first aspect or any one of the first aspect.

According to a fifth aspect, an embodiment of this application provides a computer-readable storage medium, including computer instructions. When the computer instructions are run on an electronic device, the electronic device is enabled to perform the power consumption estimation method according to any one of the first aspect and the possible implementations thereof.

According to a sixth aspect, an embodiment of this application provides a computer program product. When the computer program product runs on a computer or a processor, the computer or the processor is enabled to perform the power consumption estimation method according to any one of the first aspect and the possible implementations thereof.

It may be understood that any processor, computer-readable storage medium, computer program product, or the like provided above may be applied to the corresponding method provided above. Therefore, for beneficial effect that can be achieved by the processor, the computer-readable storage medium, the computer program product, or the like, refer to the beneficial effect of the corresponding method. Details are not described herein again.

These aspects or another aspect of this application is more concise and comprehensible in the following descriptions.

### BRIEF DESCRIPTION OF DRAWINGS

FIG. 1 is a diagram of a power consumption management system according to an embodiment of this application;
FIG. 2 is a diagram of a structure of a power consumption management system according to an embodiment of this application;
FIG. 3 is a flowchart of a method for dynamically adjusting a coefficient of a power consumption model according to an embodiment of this application;
FIG. 4 is a diagram of a structure of another power consumption management system according to an embodiment of this application;
FIG. 5 is a flowchart of a method for configuring a coefficient of a power consumption model by software based on a service scenario according to an embodiment of this application;
FIG. 6 is a diagram of a structure of another power consumption management system according to an embodiment of this application;
FIG. 7 is a flowchart of a power consumption estimation method according to an embodiment of this application;
FIG. 8 is a diagram of a structure of a processor according to an embodiment of this application;
FIG. 9 is a diagram of a structure of another processor according to an embodiment of this application;
FIG. 10 is a flowchart of another power consumption estimation method according to an embodiment of this application;
FIG. 11 is a flowchart of a power consumption adjustment operation according to an embodiment of this application;
FIG. 12 is a flowchart of another power consumption adjustment operation according to an embodiment of this application; and
FIG. 13 is a flowchart of another power consumption estimation method according to an embodiment of this application.

### DESCRIPTION OF EMBODIMENTS

For ease of understanding, some concepts related to embodiments of this application are described as examples for reference. Details are as follows.

A level-3 cache is a cache designed for data that is not hit after a level 2 cache is read. An operating principle of the level-3 cache is that a faster storage apparatus is used to store and copy a piece of data read from a slower storage apparatus. When data needs to be read from or written to the slower storage apparatus, the cache (cache) can enable the read or write action to be completed on the faster storage apparatus, to improve a system response.

The following describes the technical solutions in embodiments of this application with reference to the accompanying drawings in embodiments of this application. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more than two.

In the following descriptions, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more than two.

A DPE may include an event counter, a weight coefficient, and a calculation unit. The event counter may obtain quantities of times that different types of events occur during one or more applications and types of the different types of events. The calculation unit may calculate power consumption of the event. A formula for calculating the power consumption may be expressed as: power_estimation = ∑ *counter*/*cycle* _{*} *weight + intercept,* where counter is a count value of the event counter, cycle is a quantity of clock cycles, weight is a weight coefficient corresponding to the event, and intercept is a power consumption when a processor is in an idle (idle) state. Usually, weight and intercept need to be obtained through training by running different service loads on the processor, and are calibrated based on a manufacturing process deviation of the processor and states such as a voltage and a temperature during working.

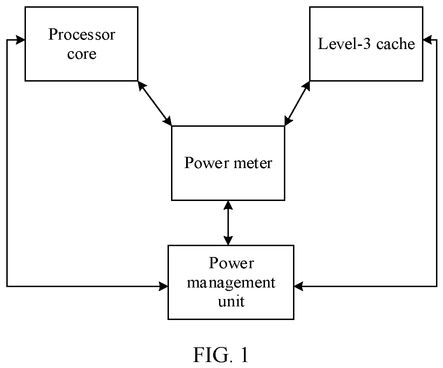

FIG. 1 shows a power consumption management system. FIG. 1 is a diagram of the power consumption management system according to an embodiment of this application. The power consumption management system includes a processor core, a level-3 cache, a power meter (power meter), and a power management unit (power management unit, PMU). The power meter separately estimates power consumption values of the processor core and the level-3 cache, and transmits the power consumption values to the PMU. The power consumption management module determines, based on the power consumption values, whether working voltages and frequencies of the processor core and the level-3 cache need to be adjusted. To provide a more accurate estimated power consumption value for a power consumption adjustment algorithm, the power consumption management system may separately provide power consumption values for different modules. For example, the power meter separately calculates the power consumption values for the core and the L3 cache, and transmits the power consumption values to the PMU. In this way, the PMU adjusts the working voltages and frequencies of the core and the L3 cache based on the power consumption values.

However, currently, a single power consumption model is used in most power consumption estimation algorithms, and an accuracy loss exists when a service load changes.

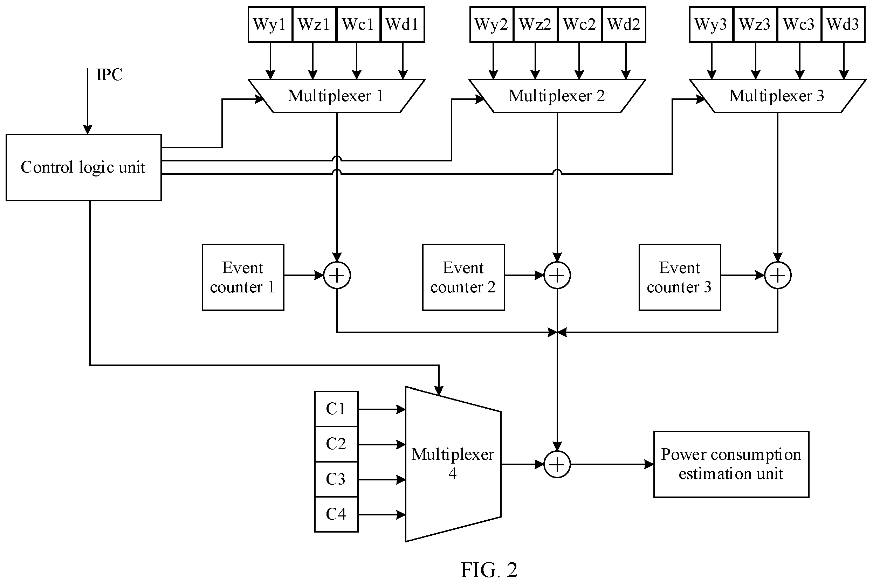

To improve accuracy of a power consumption value, a method for dynamically adjusting a coefficient of a power consumption model may be used. In this method, a weight coefficient corresponding to a power consumption event is configured based on information obtained when an application runs, to improve accuracy of a DPE. The method may be applied to a power consumption management system. FIG. 2 is a diagram of a structure of a power consumption management system according to an embodiment of this application. The power consumption management system includes a control logic unit, a plurality of event counters, a plurality of multiplexers, and a power consumption estimation unit. The plurality of event counters include an event counter 1, an event counter 2, and an event counter 3. The plurality of multiplexers include a multiplexer 1, a multiplexer 2, a multiplexer 3, and a multiplexer 4. Inputs of the plurality of multiplexers are respectively a plurality of weight coefficients. For example, the inputs of the multiplexer 1 are a weight coefficient Wy1, a weight coefficient Wz1, a weight coefficient Wc1, and a weight coefficient Wd1. The inputs of the multiplexer 4 are a plurality of constant coefficients, for example, C1, C2, C3, and C4. The control logic unit samples an instruction per clock (instruction per clock, IPC). The control logic unit may control, based on statistical information of a processor core, the multiplexer to select an appropriate weight coefficient or constant coefficient. In this way, a weight coefficient and a constant coefficient of the power consumption model may be selected and transmitted to the power consumption estimation unit.

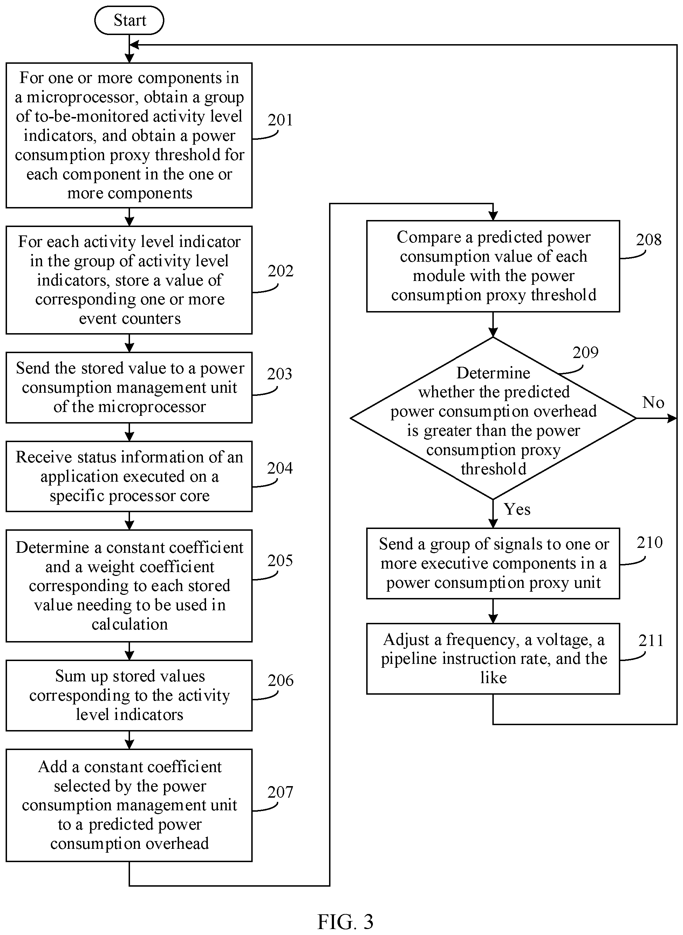

FIG. 3 is a flowchart of a method for dynamically adjusting a coefficient of a power consumption model according to an embodiment of this application. The method may be applied to the power consumption management system shown in FIG. 2. The method includes the following steps. Step 201: For one or more components in a microprocessor, obtain a group of to-be-monitored activity level indicators, and obtain a power consumption proxy threshold for each component in the one or more components. Step 202: For each activity level indicator in the group of activity level indicators, store a value of corresponding one or more event counters. Step 203: Send the stored value to a power consumption management unit of the microprocessor. Step 204: Receive status information of an application executed on a specific processor core. Step 205: Determine a constant coefficient and a weight coefficient corresponding to each stored value needing to be used in calculation. Step 206: Sum up stored values corresponding to the activity level indicators. Step 207: Add a constant coefficient selected by the power consumption management unit to a predicted power consumption overhead. Step 208: Compare a predicted power consumption value of each module with the power consumption proxy threshold. Step 209: Determine whether the predicted power consumption overhead is greater than the power consumption proxy threshold. If the predicted power consumption overhead is not greater than the power consumption proxy threshold, perform step 201. If the predicted power consumption overhead is greater than the power consumption proxy threshold, perform step 210. Step 210: Send a group of signals to one or more executive components in a power consumption proxy unit. Step 211: Adjust a frequency, a voltage, a pipeline instruction rate, and the like.

However, in the method, only load information of the processor core is considered, for example, quantities of threads of an IPC and simultaneous multithreading (simultaneous multithreading, SMT), a voltage, and a frequency. For different service loads, a same weight coefficient or constant coefficient is still used for calculation, and consequently, an obtained power consumption value is inaccurate.

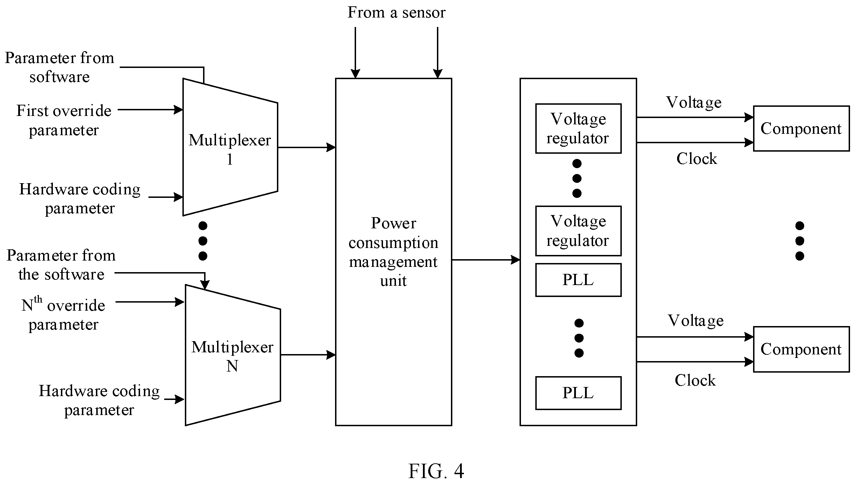

In addition, FIG. 4 is a diagram of a structure of another power consumption management system according to an embodiment of this application. The power consumption management system may include a power consumption management unit, a plurality of multiplexers, a voltage regulator, a phase-locked loop (phase-locked loop, PLL), and a component. The plurality of multiplexers include a multiplexer 1 to a multiplexer N. Inputs of the multiplexer 1 are a first override parameter, a parameter from software, and a hardware coding parameter. The power consumption management unit obtains a predicted power consumption value through calculation based on an input of the multiplexer and a parameter from a sensor, and controls the voltage regulator and the PLL to adjust configurations of the component, including adjusting a voltage and a clock of the component.

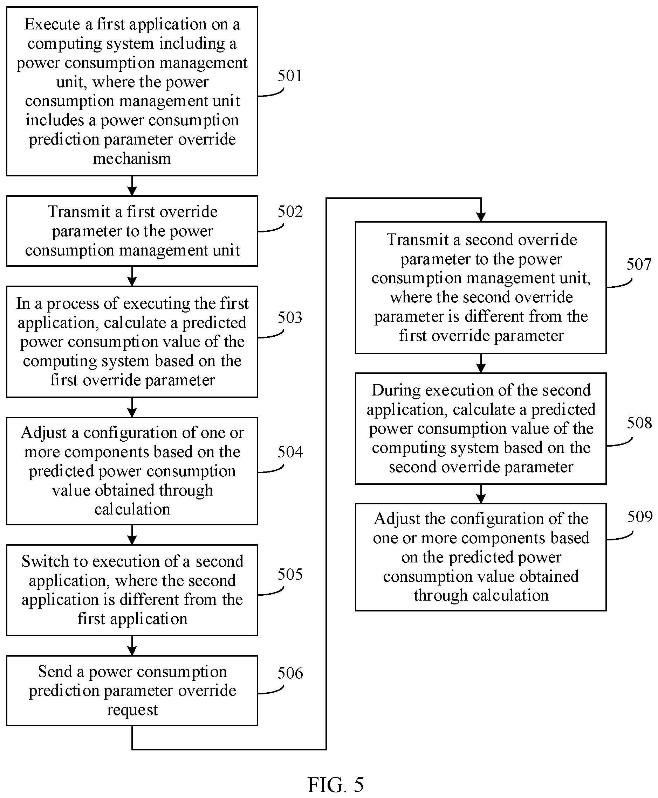

FIG. 5 is a flowchart of a method for configuring a coefficient of a power consumption model by software based on a service scenario according to an embodiment of this application. The method may be applied to the power consumption management system shown in FIG. 4. The method includes the following steps. Step 501: Execute a first application on a computing system including a power consumption management unit, where the power consumption management unit includes a power consumption prediction parameter override mechanism. Step 502: Transmit a first override parameter to the power consumption management unit. Step 503: In a process of executing the first application, calculate a predicted power consumption value of the computing system based on the first override parameter. Step 504: Adjust a configuration of one or more components based on the predicted power consumption value obtained through calculation. Step 505: Switch to execution of a second application, where the second application is different from the first application. Step 506: Send a power consumption prediction parameter override request. Step 507: Transmit a second override parameter to the power consumption management unit, where the second override parameter is different from the first override parameter. Step 508: During execution of the second application, calculate a predicted power consumption value of the computing system based on the second override parameter. Step 509: Adjust the configuration of the one or more components based on the predicted power consumption value obtained through calculation.

In the method, software can be used to configure the coefficient of the power consumption model through a hardware interface of the power consumption management unit, override a default weight coefficient of the power consumption model, and load a new power consumption model when a program process is switched. However, in the method, intervention of the software is required, and power consumption models need to be separately trained for different software. However, in a power consumption model corresponding to same software, service types of different executed segments in an application of the same software may be different. If a single power consumption model is used to estimate a power consumption of the entire application, power consumption estimation accuracy is poor.

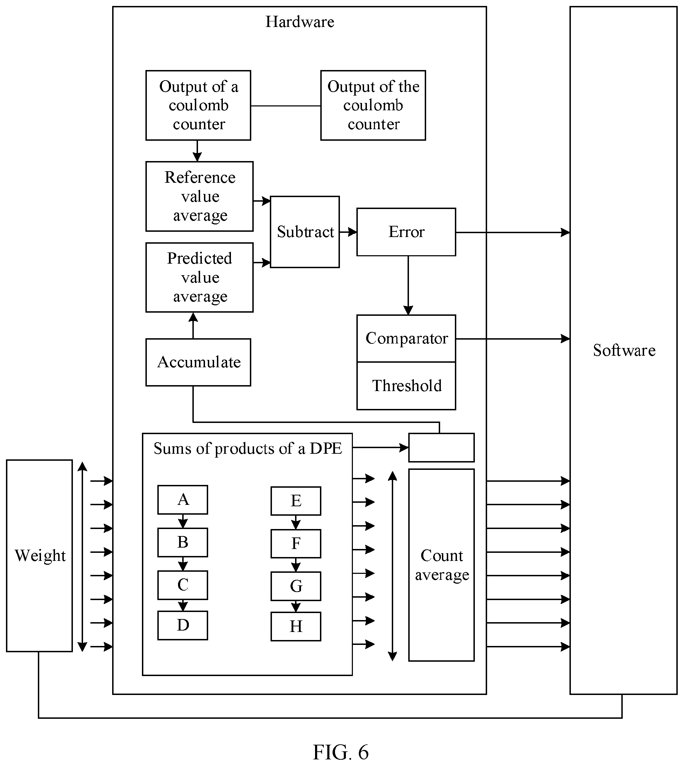

In addition, the conventional technology further includes a method for dynamically calibrating a coefficient of a power consumption model based on a reading of a power consumption sensor. FIG. 6 is a diagram of a structure of another power consumption management system according to an embodiment of this application. The power consumption management system includes a hardware unit and a software unit. The hardware unit includes a coulomb counter and the like. The coulomb counter outputs a reference value average. A predicted value average is subtracted from the reference value average to obtain an error. The predicted value average is obtained by accumulating sums of products of a DPE. The hardware unit sends the error, an output of a comparator, and a count average to the software unit. In the power consumption management system, both the coulomb counter and the DPE work. A power consumption model calibration algorithm is implemented through hardware or software. A coefficient of the DPE is calibrated online based on a result of the coulomb counter, to ensure accuracy of the DPE. However, in this method, the coulomb counter is mainly added to measure a current, which increases overheads of the hardware.

Based on this, embodiments of this application provide a power consumption estimation method. In the method, for different events, a service class is determined based on event statistical information of the event, and at least one power consumption model corresponding to the service class can be determined. Different power consumption models are matched for different events, to calculate a power consumption value corresponding to an event under the service class. This improves power consumption estimation accuracy. In addition, a power consumption value determined according to a high-accuracy power consumption estimation method can help a DPE make a better power consumption management decision, to improve performance of a processor.

The power consumption estimation method provided in embodiments of this application may be performed by the processor. The processor may be a system on a chip (system on a chip, SoC), and the SoC may include a processor core. The processor may be a single-core processor or a multi-core processor, a memory, an input/output (input/output, I/O) interface, or the like. After loading data in the processor core or the memory, the processor may process the data, for example, process the event statistical information in this application. For example, the processor may determine the service class corresponding to the event statistical information based on a type of the event in the event statistical information.

The following describes the power consumption estimation method in embodiments of this application.

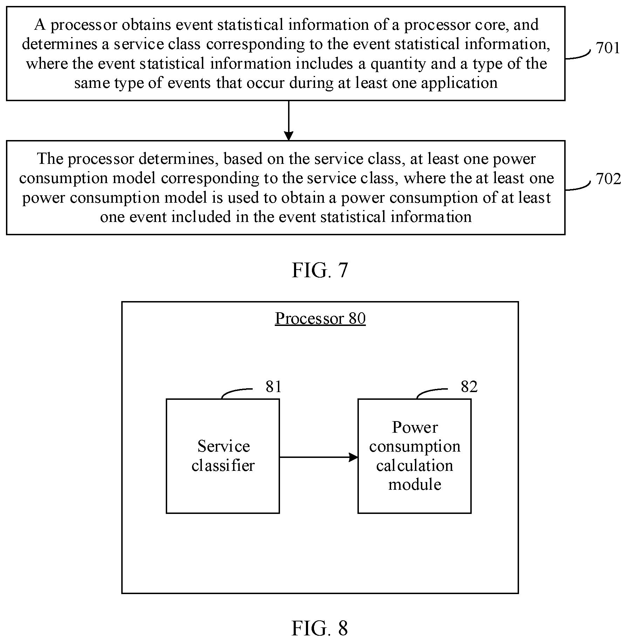

FIG. 7 is a flowchart of a power consumption estimation method according to an embodiment of this application. The method includes the following procedures.

Step 701: A processor obtains event statistical information of a processor core, and determines a service class corresponding to the event statistical information, where the event statistical information includes a quantity and a type of the same type of events that occur during at least one application.

In an example, the quantity of events is a quantity of times that the same type of events occur during the at least one application. The type of the event may include an executed instruction, a cache miss, a memory request, a page table miss, a branch mis-prediction, and/or another type of event. The service class may include different types of applications, for example, floating-point calculation, scientific calculation, a memory-intensive application, or a multithreaded application.

Step 702: The processor determines, based on the service class, at least one power consumption model corresponding to the service class, where the at least one power consumption model is used to obtain a power consumption of at least one event included in the event statistical information.

In an example, one power consumption model corresponding to the service class may be determined based on the service class, or a plurality of power consumption models corresponding to the service class may be determined based on the service class. The power consumption model may include a group of indication information and a weight coefficient. A correspondence between the service class and the power consumption model may be determined based on the service class and the indication information. The power consumption of the event is calculated based on the weight coefficient of the power consumption model.

In addition, after determining the service class based on the event statistical information, the processor may output a piece of confidence (confidence). The confidence is used to represent reliability of the determined service class. When the confidence is low, a default power consumption model may be matched for the service class. In addition, the processor may further provide a user interface, to help a user select one or more power consumption models corresponding to the service class. This can improve accuracy of determining the power consumption model by the processor based on the service class.

It should be noted that the power consumption model may be trained in an offline state, and the weight coefficient is configured in the power consumption model.

In this embodiment of this application, after the service class is determined based on the obtained event statistical information of the plurality of events, and the at least one power consumption model is determined based on the service class. This can obtain a high-accuracy estimated power consumption value. A DPE can make a better management decision based on the high-accuracy estimated power consumption value, to improve performance of the processor.

Based on the foregoing descriptions, the following describes a processor to which the power consumption estimation method is applied in embodiments of this application.

Embodiments of this application provide a processor. FIG. 8 is a diagram of a structure of a processor according to an embodiment of this application. The processor 80 includes a service classifier 81 and a power consumption calculation module 82.

The service classifier 81 is configured to: obtain event statistical information of a processor core, and determine a service class corresponding to the event statistical information, where the event statistical information includes a quantity and a type of at least one event that occurs during running of at least one application.

The power consumption calculation module 82 is configured to determine, based on the service class, at least one power consumption model corresponding to the service class, where the at least one power consumption model is used to obtain a power consumption value of the at least one event included in the event statistical information.

The service classifier 81 may be implemented based on hardware, or the service classifier 81 may be implemented based on software. A specific implementation includes but is not limited to a lookup table, a machine learning-based classification algorithm, firmware code run by a controller, and the like. A service class in the service classifier 81 may be trained in an offline state, and a training result is configured in the service classifier 81 implemented by the hardware or the software. The service class in the service classifier 81 may alternatively be determined by a person skilled in the art based on technical knowledge. The power consumption calculation module 82 may determine the at least one power consumption model based on the service class, and after determining the power consumption model, may obtain the power consumption value of the event.

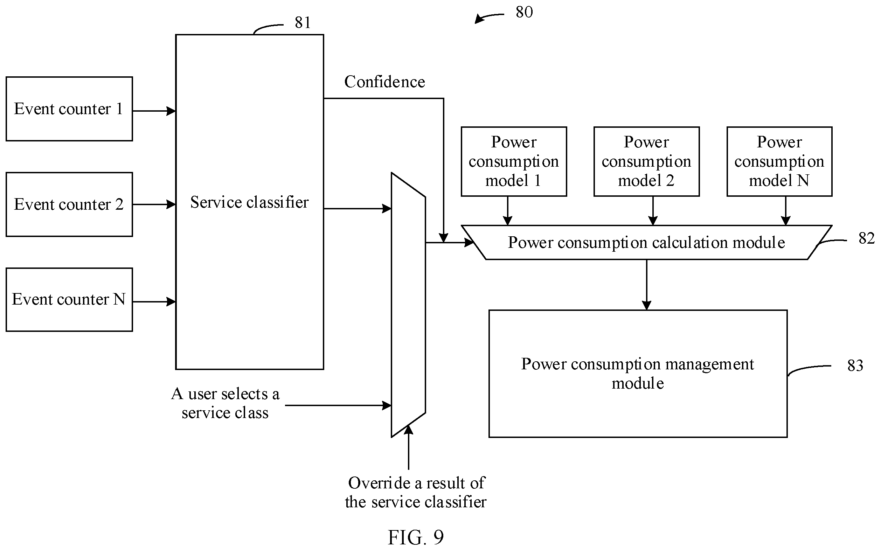

In some embodiments, on a basis of the structure of the processor shown in FIG. 8, FIG. 9 is a diagram of a structure of another processor. The processor 80 may further include a power consumption management module 83. The power consumption management module 83 is configured to perform power consumption adjustment on the processor core based on the power consumption value of the at least one event included in the event statistical information. The power consumption management module 83 may be a hardware module or an application. The power consumption value calculated by the power consumption calculation module 82 may be provided for the power consumption management module 83 in a form of the hardware to help make a decision, or may be provided for the power consumption management module 83 in a form of the application through an interface to be read. The processor 80 may further include an update module 84 (not shown in the figure). The update module 84 updates, in a manner of firmware, the service class corresponding to the event statistical information and the at least one power consumption model corresponding to the service class.

As shown in FIG. 9, the service classifier 81 samples event statistical information of an event counter 1, an event counter 2, and an event counter N. After sampling the event statistical information, the service classifier 81 determines a service class corresponding to the event statistical information, outputs confidence for determining the service class, and sends the service class and the confidence to the power consumption calculation module 82. In this case, if a user selects a service class, a result of the service classifier is overridden, and the service class selected by the user is sent to the power consumption calculation module 82. The power consumption calculation module 82 selects one or more power consumption models from a power consumption model 1, a power consumption model 2, or the power consumption model N. The power consumption calculation module 82 obtains a power consumption value through calculation based on the event statistical information of the at least one event and the power consumption model, and transmits the power consumption value to the power consumption management module 83. The power consumption management module 83 performs power consumption adjustment on the processor core based on the power consumption value.

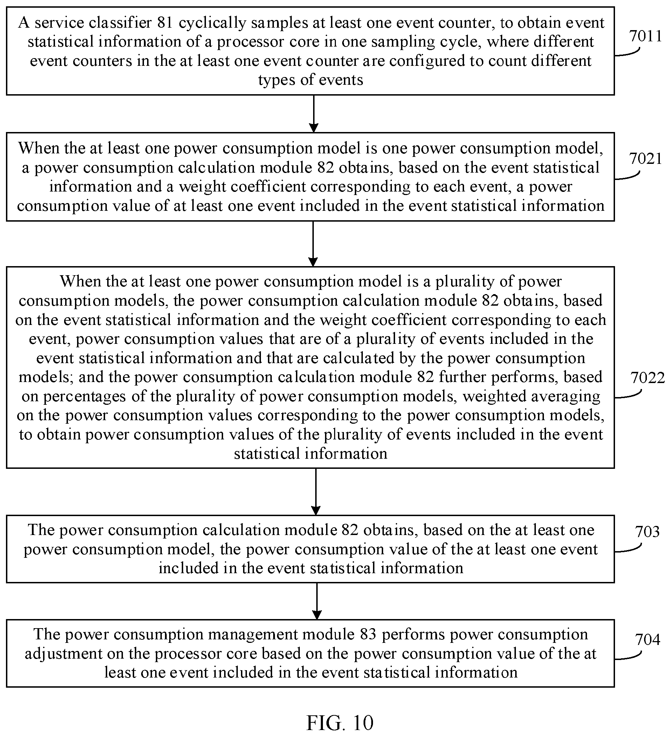

With reference to the processor shown in FIG. 8, the following describes a power consumption estimation method provided in embodiments of this application. FIG. 10 is a flowchart of another power consumption estimation method according to an embodiment of this application.

Optionally, step 701 may include the following step.

7011: The service classifier 81 cyclically samples at least one event counter, to obtain the event statistical information of the processor core in one sampling cycle, where different event counters in the at least one event counter are configured to count different types of events.

The event counter may obtain any occurrence quantity and type of different types of events that occur during execution of one or more applications. In an example, the event counter may be a 32-bit register. When one event occurs, a count value of the event counter is increased by one. In this embodiment of this application, a plurality of event counters are included, and different event counters are configured to count different types of events.

The one sampling cycle may be 1 ms, 1 µs, or the like. In an example, if a power consumption of WeChat needs to be obtained, the event counter may count a quantity of times that an event occurs per millisecond.

The one sampling cycle is greater than or equal to a working cycle of the at least one power consumption model.

If the sampling cycle of the event counter is less than the working cycle of the at least one power consumption model, it is possible that the application sampled by the event counter has stopped executing the current event. Consequently, the power consumption value obtained through calculation based on the event statistical information of the event counter may be inaccurate. The sampling cycle of the event counter should be greater than or equal to the working cycle of the at least one power consumption model, to ensure that the service class remains unchanged in the one sampling cycle, so as to improve accuracy of the power consumption value calculated by the power consumption calculation module.

For each power consumption model in the at least one power consumption model, the power consumption model includes a weight coefficient corresponding to each event.

In an example, each power consumption model may be trained in an offline state. A resource of the processor core may include a clock (clock), a lookup table, a register, an input/output interface, an internal random access memory (random access memory, RAM), a digital signal processing (digital signal processor, DSP), a high-speed transceiver (transceiver), and the like. Training data may include quantities of types, quantities, flip rates, and estimated power consumption values of clocks, lookup tables, registers, input/output interfaces, internal RAMs, DSPs, and high-speed transceivers. The training data may be provided by a power consumption estimator provided by a processor core manufacturer, or may be generated by a person skilled in the art by making a corresponding tool. During training, a multivariate linear regression model may be first selected as an initial model of the power consumption model. The initial model is trained based on the initial model and the training data. Training on the power consumption model is ended until an obtained loss (loss) is minimum. A function corresponding to the power consumption model obtained after training is ended is determined as a power consumption prediction function. Each power consumption model includes the weight coefficient corresponding to each event.

Optionally, step 702 may include the following steps.

Step 7021: When the at least one power consumption model is one power consumption model, the power consumption calculation module 82 obtains, based on the event statistical information and the weight coefficient corresponding to each event, the power consumption value of the at least one event included in the event statistical information.

The power consumption calculation module 82 may select one power consumption model for one event for calculation. The power consumption calculation module 82 first reads a count of the event counter and divides the count by a corresponding quantity of clock cycles, to obtain normalized event statistics, and then multiplies the normalized event statistics by a weight coefficient in the power consumption model and performs accumulation, to obtain a final power consumption value. For example, it is assumed that the weight coefficient of the power consumption model is w1, the count value of the event counter is e1, and the quantity of clock cycles of the sampling cycle is c, the power consumption value calculated by the power consumption model is p1=e1/c*w1+intercept. Calculation is performed on all the events (it is assumed that n events exist) of the processor core according to the foregoing method, and accumulation is performed. To be specific, a total power consumption value of the processor core is P=e1/c*w1+e2/c*w2+...+en/c*wn+intercept.

Step 7022: When the at least one power consumption model is a plurality of power consumption models, the power consumption calculation module 82 obtains, based on the event statistical information and the weight coefficient corresponding to each event, power consumption values that are of the plurality of events included in the event statistical information and that are calculated by the power consumption models; and the power consumption calculation module 82 further performs, based on percentages of the plurality of power consumption models, weighted averaging on the power consumption values corresponding to the power consumption models, to obtain power consumption values of the plurality of events included in the event statistical information.

The power consumption calculation module 82 may select the plurality of power consumption models for one event for calculation. The power consumption calculation module 82 first reads a count of the event counter and divides the count by a corresponding quantity of clock cycles, to obtain reconsidered event statistics, and then multiplies the reconsidered event statistics by a weight coefficient in one power consumption model in the plurality of power consumption models, to obtain a power consumption value that is of the event and that is calculated based on the one power consumption model. The power consumption calculation module 82 obtains a power consumption value that is of the event and that is calculated based on each of the plurality of power consumption models, and then performs weighted averaging on the power consumption values corresponding to the power consumption models based on percentages of the plurality of power consumption models, to obtain a final power consumption value.

In an example, it is assumed that the weight coefficient of the one power consumption model in the plurality of power consumption models is W1, the count value of the event counter is E1, and the quantity of clock cycles of the sampling cycle is C. The power consumption value calculated by the power consumption model is P1=E1/C*W1+intercept. Power consumption values obtained by the power consumption processing module 82 based on other power consumption models are P2, P3, ..., Pn, where n is a positive integer greater than or equal to 2. If the percentages of the plurality of power consumption models are D1, D2, ..., Dn, the total power consumption value of the event is P=P2*D2+P3*D3+...+Pn*Dn+intercept.

Optionally, the power consumption estimation method provided in this embodiment of this application may further include the following steps.

Step 703: The power consumption calculation module 82 obtains, based on the at least one power consumption model, the power consumption value of the at least one event included in the event statistical information.

Specifically, the power consumption calculation module 82 selects the at least one power consumption model for calculation based on the service class, to obtain the power consumption value of the at least one event. In this embodiment of this application, different events are classified, and different power consumption models are matched for service classes corresponding to the different events. Therefore, a power consumption value with high accuracy can be obtained.

Step 704: The power consumption management module 83 performs power consumption adjustment on the processor core based on the power consumption value of the at least one event included in the event statistical information.

Specifically, power consumption adjustment may include a dynamic voltage and frequency scaling (dynamic voltage frequency scaling, DVFS) operation and a task migration operation between big and little cores.

In an example, the power consumption management module 83 may monitor, in real time, a power consumption value that is about the processor core and that is calculated by the power consumption calculation module 82. When the power consumption value is greater than a preset threshold, the power consumption management module 83 performs power consumption adjustment on the processor core. For example, the power consumption management module 83 may perform the DVFS operation. The DVFS operation may be used to dynamically scale a voltage and a frequency, and decrease the voltage and the frequency when the processor does not require high performance, to reduce a power consumption of the processor, or increase the voltage and the frequency when the processor requires high performance, to improve performance of the processor. This achieves an objective of considering both performance and power saving.

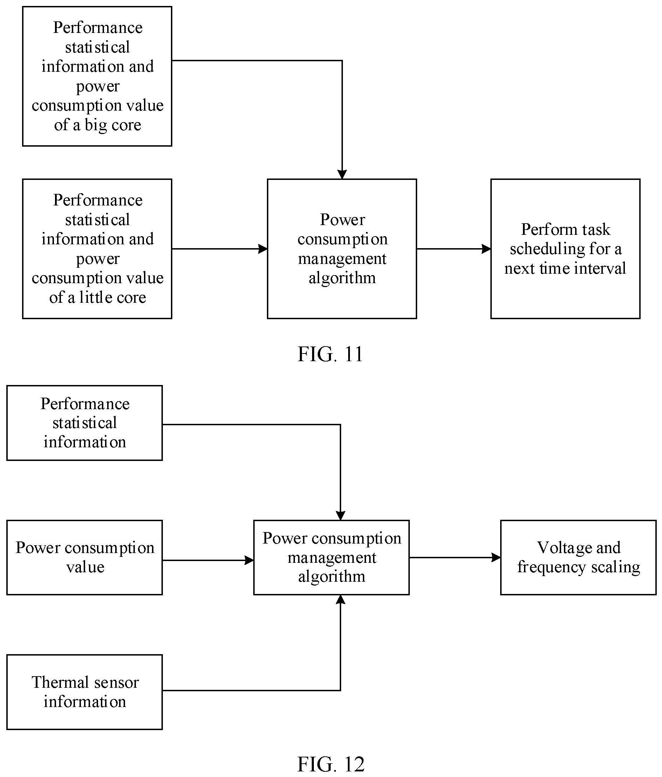

In another example, the power consumption estimation method provided in this embodiment of this application may be applied to task migration between the big core and the little core. A design of the big core (big core) and the little core (little core) usually exists in a SoC. FIG. 11 is a flowchart of a power consumption adjustment operation according to an embodiment of this application. The big core has higher performance but a higher power consumption, and the little core has lower performance but a lower power consumption and better energy efficiency. Because the application is different from a hotspot function, when working threads of the application is statically allocated to different cores for running, energy efficiency is usually poor. In a power consumption management algorithm in the power consumption management module 83, performance statistical information and a power consumption value of the big core and performance statistical information and a power consumption value of the little core are considered, to control for performing task scheduling for a next time interval. The power consumption management module 83 in this embodiment of this application can schedule a task between the big core and the little core based on the power consumption values of the big core and the little core, to improving energy efficiency of the processor.

Specifically, FIG. 12 is a flowchart of another power consumption adjustment operation according to an embodiment of this application. Step 704 may include: The power consumption management module 83 performs power consumption adjustment on the processor core based on the power consumption value of the processor core, performance statistical information of the processor core, and thermal sensor information corresponding to the processor core.

When determining a power consumption adjustment decision, the power consumption management module 83 not only considers the power consumption value of the processor core, but also considers the performance statistical information of the processor core and the thermal sensor information corresponding to the processor core. Refer to FIG. 11. In a power consumption management algorithm in the power consumption management module 83, a power consumption adjustment strategy is made by comprehensively considering the performance statistical information, the power consumption value, and the thermal sensor information. The power consumption adjustment strategy may be voltage and frequency scaling.

The performance statistical information of the processor core may include a frequency, a cache, a manufacturing process, a packaging technology, and the like. The performance statistical information may include performance statistical information of the big core, or may include performance statistical information of the little core.

In addition, a thermal sensor may measure a temperature signal of the processor core, and convert the temperature signal into an electrical signal to provide the thermal sensor information corresponding to the processor core. The thermal sensor may be integrated inside the processor core, or may exist independently of the processor core. In an example, the thermal sensor may be a thermocouple sensor. A thermocouple in the thermocouple sensor has features such as stable performance, a large temperature measurement range, and long-distance signal transmission. The thermocouple may convert the temperature signal of the processor core into a direct current voltage signal. The power consumption management module 83 may directly read the direct current voltage signal, and determine whether a working temperature of the processor core is excessively high. If the working temperature of the processor core is excessively high, the power consumption management module 83 may perform the power consumption adjustment.

Therefore, the power consumption management module 83 comprehensively considers the power consumption of the processor core, the performance statistical information of the processor core, and the thermal sensor information corresponding to the processor core. In this way, a more intelligent power consumption adjustment decision can be made. Energy and heat that are consumed by the processor can be minimized while a minimum performance loss of the processor is ensured.

Optionally, the power consumption estimation method provided in this embodiment of this application may further include: If the service class is a preset service class, the service classifier 81 stops determining the service class corresponding to the event statistical information. The power consumption calculation module 82 obtains, based on the at least one power consumption model, the power consumption value of the at least one event included in the event statistical information.

Specifically, the preset service class may be fewer types of service classes. To further reduce the power consumption of the processor core, if types of service classes output by the service classifier 81 are fewer, the service classifier 81 may be turned off, and the service classifier 81 stops determining the service class corresponding to the event statistical information. In this case, the power consumption calculation module 82 may directly obtain the event statistical information, and calculate the power consumption value based on at least one power consumption model matched for a previous service class.

Optionally, the power consumption estimation method provided in this embodiment of this application may further include: The update module 84 updates, in a manner of firmware, the service class corresponding to the event statistical information and the at least one power consumption model corresponding to the service class.

In an example, the firmware is a program written into an electrically erasable read-only memory (electrically erasable programmable read-only memory, EEPROM) or a flash (flash) chip. The EEPROM and the flash chip can be repeatedly flushed, to modify and update the firmware. For calibration of the power consumption model or a new service scenario, the user may perform calibration or update in a manner of modifying the firmware.

In this embodiment of this application, the service classifier 81 and the power consumption calculation module 82 can configure a parameter in the manner of the firmware, to facilitate subsequent calibration of the power consumption model or adaptation to the new service scenario.

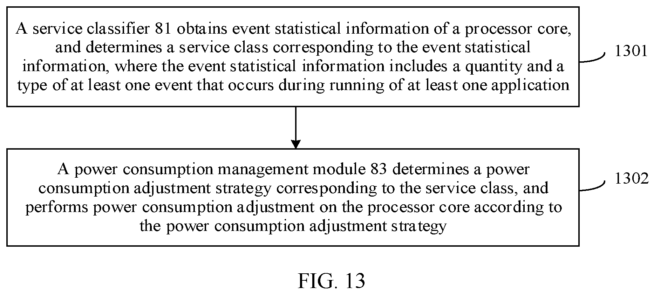

FIG. 13 shows another power consumption estimation method according to an embodiment of this application. The method includes the following procedures.

Step 1301: The service classifier 81 obtains event statistical information of a processor core, and determines a service class corresponding to the event statistical information, where the event statistical information includes a quantity and a type of at least one event that occurs during running of at least one application.

Step 1302: The power consumption management module 83 determines a power consumption adjustment strategy corresponding to the service class, and performs power consumption adjustment on the processor core according to the power consumption adjustment strategy.

In an example, the power consumption management module 83 may be coupled to the service classifier 81. The power consumption management module 83 may receive a classification result of the service classifier 81, and determine a power consumption adjustment strategy for a specific service scenario. The specific service scenario may be a memory-intensive instruction. If the processor core generates the memory-intensive instruction, the processor 80 may make the power consumption adjustment strategy, and perform power consumption adjustment on the processor core according to the power consumption adjustment strategy.

An embodiment of this application further provides a computer storage medium. The computer storage medium stores computer instructions. When the computer instructions are run on an electronic device, the electronic device is enabled to perform the foregoing related method steps, to implement the power consumption estimation method in the foregoing embodiments.

An embodiment of this application further provides a computer program product. When the computer program product runs on a computer, the computer is enabled to perform the foregoing related steps, to implement the power consumption estimation method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the power consumption estimation method performed by the electronic device in the foregoing method embodiments.

The electronic device, the computer storage medium, the computer program product, or the chip provided in embodiments is configured to perform a corresponding method provided above. Therefore, for beneficial effect that can be achieved by the electronic device, the computer storage medium, the computer program product, or the chip, refer to the beneficial effect in the corresponding method provided above. Details are not described herein again.

Based on descriptions of the foregoing implementations, a person skilled in the art may understand that, for convenience and brevity of description, division into the foregoing functional modules is merely used as an example for description. During actual application, the foregoing functions may be allocated to different functional modules for implementation based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communicative connections may be implemented through some interfaces. The indirect couplings or communicative connections between the apparatuses or units may be implemented in electrical, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The integrated unit may be stored in a readable storage medium when being implemented in the form of the software functional unit and sold or used as an independent product. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A power consumption estimation method, wherein the method comprises:
obtaining, by a processor, event statistical information of a processor core, and determining a service class corresponding to the event statistical information, wherein the event statistical information comprises a quantity and a type of at least one event that occurs during running of at least one application; and
determining, by the processor based on the service class, at least one power consumption model corresponding to the service class, wherein the at least one power consumption model is used to obtain a power consumption value of the at least one event comprised in the event statistical information.

2. The method according to claim 1, wherein the obtaining, by a processor, event statistical information of a processor core comprises:
cyclically sampling, by the processor, at least one event counter, to obtain the event statistical information of the processor core in one sampling cycle, wherein different event counters in the at least one event counter are configured to count different types of events.

3. The method according to claim 2, wherein the one sampling cycle is greater than or equal to a working cycle of the at least one power consumption model.

4. The method according to claim 1, wherein for each power consumption model in the at least one power consumption model, the power consumption model comprises a weight coefficient corresponding to each event.

5. The method according to claim 4, wherein that the processor obtains, based on the at least one power consumption model, the power consumption value of the at least one event comprised in the event statistical information comprises:
when the at least one power consumption model is one power consumption model, the processor obtains, based on the event statistical information and the weight coefficient corresponding to each event, the power consumption value of the at least one event comprised in the event statistical information.

6. The method according to claim 4, wherein that the processor obtains, based on the at least one power consumption model, the power consumption value of the at least one event comprised in the event statistical information comprises:
when the at least one power consumption model is a plurality of power consumption models, the processor obtains, based on the event statistical information and the weight coefficient corresponding to each event, power consumption values that are of a plurality of events comprised in the event statistical information and that are calculated by the power consumption models; and
the processor performs, based on percentages of the plurality of power consumption models, weighted averaging on the power consumption values corresponding to the power consumption models, to obtain power consumption values of the plurality of events comprised in the event statistical information.

7. The method according to claim 1, wherein the method further comprises:
obtaining, by the processor based on the at least one power consumption model, the power consumption value of the at least one event comprised in the event statistical information; and
performing, by the processor, power consumption adjustment on the processor core based on the power consumption value of the at least one event comprised in the event statistical information.

8. The method according to claim 7, wherein the performing, by the processor, power consumption adjustment on the processor core based on the power consumption value of the at least one event comprised in the event statistical information comprises:
performing power consumption adjustment on the processor core based on a power consumption value of the processor core, performance statistical information of the processor core, and thermal sensor information corresponding to the processor core.

9. The method according to any one of claims 1 to 8, wherein the method further comprises:
if the service class is a preset service class, stopping, by the processor, determining the service class corresponding to the event statistical information; and
obtaining, by the processor based on the at least one power consumption model, the power consumption value of the at least one event comprised in the event statistical information.

10. The method according to any one of claims 1 to 9, wherein the method further comprises:
updating, by the processor in a manner of firmware, the service class corresponding to the event statistical information and the at least one power consumption model corresponding to the service class.

11. A processor, wherein the processor comprises:
a service classifier, configured to: obtain event statistical information of a processor core, and determine a service class corresponding to the event statistical information, wherein the event statistical information comprises a quantity and a type of at least one event that occurs during running of at least one application; and
a power consumption calculation module, configured to determine, based on the service class, at least one power consumption model corresponding to the service class, wherein the at least one power consumption model is used to obtain a power consumption value of the at least one event comprised in the event statistical information.

12. The processor according to claim 11, wherein the service classifier is further configured to cyclically sample at least one event counter, to obtain the event statistical information of the processor core in one sampling cycle, wherein different event counters in the at least one event counter are configured to count different types of events.

13. The processor according to claim 12, wherein the one sampling cycle is greater than or equal to a working cycle of the at least one power consumption model.

14. The processor according to claim 11, wherein for each power consumption model in the at least one power consumption model, the power consumption model comprises a weight coefficient corresponding to each event.

15. The processor according to claim 14, wherein the power consumption calculation module is further configured to:
when the at least one power consumption model is one power consumption model, obtain, based on the event statistical information and the weight coefficient corresponding to each event, the power consumption value of the at least one event comprised in the event statistical information.

16. The processor according to claim 14, wherein the power consumption calculation module is further configured to:
when the at least one power consumption model is a plurality of power consumption models, obtain, based on the event statistical information and the weight coefficient corresponding to each event, power consumption values that are of a plurality of events comprised in the event statistical information and that are calculated by the power consumption models; and
perform, based on percentages of the plurality of power consumption models, weighted averaging on the power consumption values corresponding to the power consumption models, to obtain power consumption values of the plurality of events comprised in the event statistical information.

17. The processor according to claim 11, wherein the processor further comprises a power consumption management module, wherein
the power consumption calculation module is configured to obtain, based on the at least one power consumption model, the power consumption value of the at least one event comprised in the event statistical information; and
the power consumption management module is configured to perform power consumption adjustment on the processor core based on the power consumption value of the at least one event comprised in the event statistical information.

18. The processor according to claim 17, wherein the power consumption management module is further configured to:
perform power consumption adjustment on the processor core based on a power consumption value of the processor core, performance statistical information of the processor core, and thermal sensor information corresponding to the processor core.

19. The processor according to any one of claims 11 to 17, wherein the service classifier is further configured to:
if the service class is a preset service class, stop determining the service class corresponding to the event statistical information; and
the power consumption calculation module is further configured to obtain, based on the at least one power consumption model, the power consumption value of the at least one event comprised in the event statistical information.

20. The processor according to any one of claims 11 to 18, wherein the processor further comprises an update module, wherein
the update module updates, in a manner of firmware, the service class corresponding to the event statistical information and the at least one power consumption model corresponding to the service class.

21. A computer-readable storage medium, comprising computer instructions, wherein when the computer instructions are run on an electronic device, the electronic device is enabled to perform the method according to any one of claims 1 to 10.

22. A computer program product, wherein when the computer program product runs on a computer or a processor, the computer or the processor is enabled to perform the method according to any one of claims 1 to 10.
